# EUROPÄISCHE PATENTANMELDUNG

(11) **EP 1 159 881 A2**
(43) Veröffentlichungstag der Anmeldung: **05.12.2001**
(21) Anmeldenummer: 01111499.8
(22) Anmeldetag: 11.05.2001
(51) Int. Cl.: A23L 1/164, A23L 1/20, B02C 4/30

(54) **Walze zum Bearbeiten von Lebensmitteln und/oder Lebensmittelrohprodukten**

(30) Priorität: 03.06.2000 DE 10027757
(71) Anmelder: Walzen Irle GmbH, D-57250 Netphen (DE)
(72) Erfinder: Schönemann, Joachim, 57250 Netphen-Deuz (DE)
(74) Vertreter: Grosse, Wolf-Dietrich, Dipl.-Ing.

(57) **Zusammenfassung**

Die Erfindung betrifft die Verwendung einer rotierbaren Walze mit einem Walzenkörper, der einen außenseitigen Bezug aus einem nicht metallischen Material, insbesondere Kunststoff oder einer Kunststoff-Gummi-Mischung, aufweist, zum Walzen von ölhaltigen Feldfrüchten oder anderen Getreidearten bzw Lebensmittel.

## Beschreibung

Die Erfindung betrifft eine Verwendung einer Walze mit einem außenseitigen Kunststoffkörper nach dem Oberbegriff des Anspruchs 1 bzw. des Anspruchs 2 sowie eine Walze nach dem Oberbegriff des Anspruchs 5.

Beim Flockieren und Verarbeiten von ölhaltigen Feldfrüchten, wie etwa Sojabohnen, Mais, Raps, Sonnenblumenkernen oder dergleichen, aber auch in der Verarbeitung von getrockneten Lebensmittelprodukten, etwa bei der Herstellung von Cereals (Corn Flakes) oder ähnlichem, werden Walzen eingesetzt. Bei Verunreinigungen in den zu verarbeitenden Produkten und insbesondere wenn diese harte Kerne aufweisen, werden in die mit den Produkten in Kontakt tretenden Walzenoberflächen punktuell hohe Kräfte eingetragen - anders als etwa in der Stahlherstellung, wo gleichmäßige Kräfte auf die gesamte Walzenoberfläche wirken.
Durch die hohen Punktkräfte kann es zu Gefügeänderungen, etwa bei Gußwalzen, in der Walzenoberfläche kommen. Diese Gefügeänderungen ziehen schlimmstenfalls Ausbrüche nach sich, die zur Unbrauchbarkeit der Walze führen.

Der Erfindung liegt die Aufgabe zugrunde, hier eine Verbesserung zu erreichen.

Die Erfindung löst diese Aufgabe mit den Merkmalen des Anspruchs 1 oder 2 bzw. durch eine Walze mit den Merkmalen des Anspruchs 5. Weitere vorteilhafte Ausgestaltungen sind in den Ansprüchen 3 und 4 sowie 6 bis 9 angegeben.

Erfindungsgemäß wird eine Walze zum Flockieren von Ölsaaten oder für andere Bearbeitung von Lebensmitteln oder Rohprodukten für Lebensmittel, mit einem Bezug aus nicht metallischem Material versehen, der insbesondere aus Kunststoff oder einer Kunststoff-Gummi-Mischung besteht. Dadurch ist eine hohe Elastizität der Walzenoberfläche gewährleistet. Dauerhafte punktuelle Einformungen in die Walze durch Kerne oder andere harte Anteile in den zu walzenden Produkten werden durch die Elastizität des Bezuges vermieden. Der Vorteil fällt insbesondere gegenüber spröden Walzenkörpern aus Guß ins Gewicht. Auch gegenüber Stahlwalzenkörpern ist die Flexibilität deutlich erhöht, so daß die Lebensdauer derartiger, mit einem Bezug versehener Walzen verbessert ist.

Wenn der Kunststoff- oder Kunststoff-Gummi-Bezug an dem Walzenkörper als Mantel aufgezogen ist, muß bei einem Oberflächendefekt nicht mehr die ganze Walze verschrottet werden. Es genügt, den Kunststoffbezug auszuwechseln. Daraus resultiert ein erheblicher Kostenvorteil.

Damit der Bezug trotz seiner Flexibilität einen hinreichend hohen Walzdruck auf die zu walzenden Produkte ausüben kann, liegt die Härte des verwendeten Kunststoffs im Bereich der Härte von vergütetem Stahl. Somit ist an dem gewalzten Produkt keine Qualitätseinbuße hinzunehmen.

Weitere Vorteile und Einzelheiten ergeben sich aus einem in der Zeichnung dargestellten und nachfolgend beschriebenen Ausführungsbeispiel des Gegenstandes der Erfindung.

In der Zeichnung zeigt:

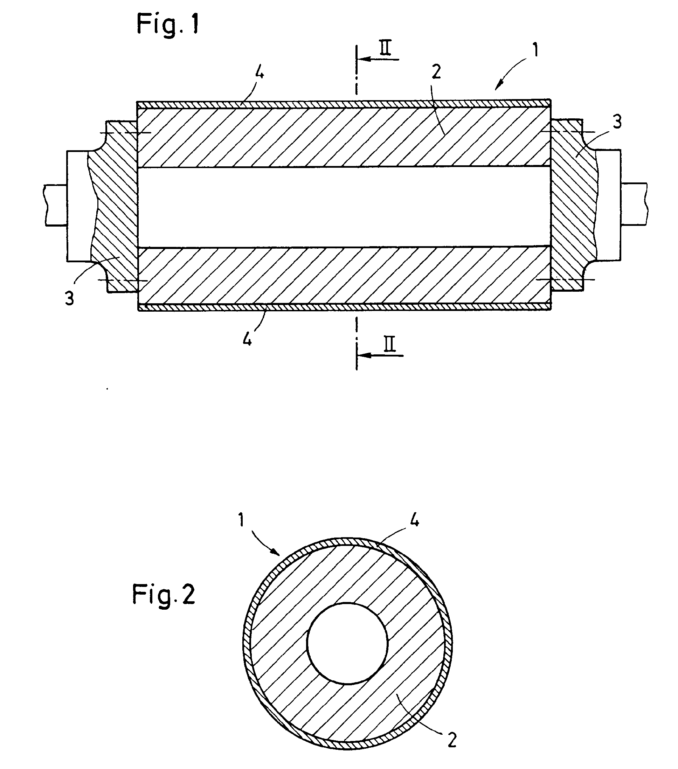

- Fig. 1: eine schematische Ansicht einer erfindungsgemäßen Flockierwalze,
- Fig. 2: einen Schnitt entlang der Linie II-II in Fig. 1.

Die im Ausführungsbeispiel dargestellte Walze 1 eines nicht dargestellten Walzenpaars weist einen Walzenkörper 2 auf, der über seitliche Zapfen 3 einspannbar ist. Beide Walzen werden angetrieben. Eine der Walzen läuft als Festwalze, die andere als Loswalze, wobei die Walzen mit einem für das jeweilige Produkt definierten Spalt angestellt werden.

Der Walzenkörper 2 ist im Ausführungsbeispiel über seine gesamte Ballenlänge umfangseitig von einem Bezug 4 umgriffen, der auf dem Walzenkörper 2 fest aufgebracht ist, beispielsweise durch Kunststoffwicklung mit anschließender Vulkanisierung oder durch andere Verfahren.

Der Bezug 4 besteht aus einem flexiblen, elastisch verformbaren Material, beispielsweise einem thermoplastischen Kunststoff oder einem Kunststoff-Gummi-Gemisch. Das Material weist eine hohe Härte auf und bietet dadurch einen hohen Widerstand gegen Bildung von Einformungen in seine Oberfläche. Somit können große NIP-Drücke (Spaltdrücke) erreicht werden. Auch ist bei Verwendung entsprechender Kunststoffe die Widerstandsfähigkeit gegen wärmebedingte Verformungen, sog. hot spots, sehr groß.

Derartige Walzen 1 werden erfindungsgemäß eingesetzt zum Walzen von ölhaltigen Produkten, etwa Sojabohnen, Maiskörnern, Raps, Sonnenblumenkernen oder dergleichen. Auch für das Flockieren von Getreide- und anderen Kornprodukten, etwa in der Herstellung von Trockenmüslis, Corn Flakes, o. ä., finden diese Walzen 1 Verwendung.

Die Bezüge 4 können als Nachrüstsätze auch für bisherige Walzenkörper 2 angewandt werden. Dann können auch Walzenkörper (2) weiterbenutzt werden, die schon leichte Oberflächenschäden aufweisen, da diese durch die aufzubringende Kunststoffhülle 4 geglättet werden.

### Bezugszeichenliste:

- 1: Walze
- 2: Walzenkörper
- 3: Zapfen
- 4: Bezug

## Patentansprüche

1. Verwendung einer rotierbaren Walze (1) mit einem Walzenkörper (2), der einen außenseitigen Bezug (4) aus einem nicht metallischen Material, insbesondere Kunststoff oder einer Kunststoff-Gummi-Mischung, aufweist, zum Walzen von ölhaltigen Feldfrüchten oder anderen Getreidearten.

2. Verwendung einer rotierbaren Walze (1) mit einem Walzenkörper (2), der einen außenseitigen Bezug (4) aus einem nicht metallischen Material, insbesondere Kunststoff oder einer Kunststoff-Gummi-Mischung, aufweist, zum Bearbeiten von Lebensmitteln.

3. Verwendung einer Walze (1) nach einem der Ansprüche 1 oder 2,
**dadurch gekennzeichnet,**
**daß** die Walze (1) zur Zwischenbearbeitung von Lebensmitteln in der industriellen Herstellung eingesetzt wird.

4. Verwendung einer Walze (1) nach einem der Ansprüche 1 bis 3,
**dadurch gekennzeichnet,**
**daß** sie zum Flockieren von Lebensmitteln eingesetzt wird.

5. Walze (1) zum Bearbeiten von Lebensmitteln oder Lebensmittelrohprodukten,
**dadurch gekennzeichnet,**
**daß** die Walze (1) einen metallischen Walzenkörper (2) aufweist, der umfangseitig von einem nicht metallischen Bezug (4) umgriffen ist.

6. Walze nach Anspruch 5,
**dadurch gekennzeichnet, daß** der Bezug (4) aus Kunststoff besteht.

7. Walze nach Anspruch 5,
**dadurch gekennzeichnet,**
**daß** der Bezug (4) aus einer Kunststoff-Gummi-Mischung besteht.

8. Walze nach einem der Ansprüche 5 bis 7,
**dadurch gekennzeichnet,**
**daß** der Bezug (4) eine der Härte eines vergüteten Stahls entsprechende Oberflächenhärte hat.

9. Walze nach einem der Ansprüche 5 bis 8,
**dadurch gekennzeichnet,**
**daß** der Bezug (4) an dem Walzenkörper (2) lösbar angeordnet ist.
